# EUROPÄISCHE PATENTANMELDUNG

(11) **EP 3 922 211 A1**
(43) Veröffentlichungstag der Anmeldung: **15.12.2021**
(21) Anmeldenummer: 20179315.5
(22) Anmeldetag: 10.06.2020
(51) Int. Cl.: A61C 19/04

(54) **VORRICHTUNG UND VERFAHREN ZUM ERMITTELN DER RELATIVEN LAGE EINES OBER- UND UNTERKIEFERS**

(71) Anmelder: a.tron3d GmbH, 9020 Klagenfurt am Wörthersee (AT)
(72) Erfinder: JESENKO, Juergen, 9587 Riegersdorf (AT)
(74) Vertreter: Beer & Partner Patentanwälte KG

(57) **Zusammenfassung**

Eine Vorrichtung zum Ermitteln der relativen Lage eines Ober- und Unterkiefers weist einen oberen Träger (1) mit einer oberen Anlagefläche (2) für den Oberkiefer und einen unteren Träger (3) mit einer unteren Anlagefläche (4) für den Unterkiefer auf, wobei die Träger (1, 3) in einer Gebrauchslage der Vorrichtung mit einem Oberkiefer und einem Unterkiefer korrespondieren. Die Vorrichtung weist weiters eine Einrichtung zum Erfassen der relativen, räumlichen Lage des oberen und unteren Trägers zueinander auf.

## Beschreibung

Die Erfindung betrifft weiters ein computerimplementiertes Verfahren zum Betreiben einer Vorrichtung zum Ermitteln der relativen Lage eines Ober und Unterkiefers.

Es sind im Stand der Technik verschiedene Methoden bekannt, um die relative Lage von Kiefern zu bestimmen, wenn diese noch über wesentliche Teile der Bezahnung verfügen. Dabei werden die verbliebenen Zähne in einer oder mehr Stellungen gegeneinander gebissen und dann entweder analog (beispielsweise durch einen Zahnabdruck) oder digital, beispielsweise durch einen Biss-Scann (siehe beispielweise EP 3 444 780 A1) erfasst.

Sind allerdings nicht mehr hinreichend Zähne vorhanden, die für einen Biss ineinandergreifen können, lässt sich auch kein Biss mehr erfassen.

In der analogen Dentaltechnik kann dann für die Erzeugung eines Zahnersatzes in einer Abfolge von mehreren Zahn- bzw. Zahnfleischabdrücken ein möglicher Kieferabstand bestimmt werden, der dann als Basis für einen (re)konstruierten Biss dient. Dieses Verfahren ist sehr zeit- und materialaufwändig und obendrein nicht sehr präzise.

In der digitalen Dentaltechnik sind keine Methoden bekannt, um Kieferabstände für die Rekonstruktion oder Neukonstruktion eines Bisses zu bestimmen, wenn keine hinreichende Anzahl an Zähnen für einen ineinandergreifenden Biss vorhanden ist.

Aufgabe der Erfindung ist es daher, eine verbesserte Möglichkeit zum Erfassen von Kieferabständen zu bieten, insbesondere zum Erfassen von Kieferabständen bei nicht vorhandener oder zu geringer Bezahnung des Kiefers.

Gelöst wird diese Aufgabe mit einer Vorrichtung mit den Merkmalen des Anspruchs 1 sowie mit einem Verfahren mit den Merkmalen des Anspruchs 14.

Der grundsätzliche Aufbau der erfindungsgemäßen Vorrichtung weist drei entscheidende Elemente auf: Es gibt erstens eine obere Anlagefläche, die auf einem oberen Träger angeordnet ist und in Gebrauchslage mit dem Oberkiefer korrespondiert, bzw. an am Oberkiefer befindlichem Zahnfleisch anliegt. Es gibt zweitens eine untere Anlagefläche, die auf einem unteren Träger angeordnet ist und in Gebrauchslage mit dem Unterkiefer korrespondiert, bzw. an am Unterkiefer befindlichem Zahnfleisch anliegt. Und es gibt drittens ein Verbindungsstück, das verschiedenartig aufgebaut sein kann und die relative Lage der beiden Träger zueinander erfassen kann. Dieses Erfassen kann ganz einfach mechanisch, beispielsweise in Form von Schiebelehren, oder auch digital erfolgen. Die Träger können beispielsweise überein Gelenk, insbesondere ein Kugelgelenk, verbunden sein, dessen Stellung erfasst wird.

Sowohl für die Träger als auch für die Verbindung zwischen den Trägern gibt es verschiedene vorteilhafte Ausführungsformen, die einzeln und/oder in Kombination die Erfindung verbessern.

Die Träger selbst können Ausnehmungen aufweisen, die mit intraoralen Strukturen korrespondieren. Bei den intraoralen Strukturen kann es sich beispielsweise um verbliebene Zähne oder Abuttments von Implantaten handeln, die ein gleichmäßiges Anliegen der Anlageflächen am Zahnfleisch verhindern könnten. Um besonders an die jeweilige intraorale Situation angepasste Träger zu erzeugen, können die jeweiligen Kieferbögen vorher gescannt oder mit einem physischen Abdruck erfasst worden sein.

Eine weitere vorteilhafte Ausführungsform der Träger kann beinhalten, dass diese wenigstens bereichsweise aus einem elastischen Material gefertigt sind. Dadurch kann die Verwendung der Vorrichtung für die Person, deren Biss rekonstruiert werden soll, angenehmer gestaltet werden. Selbstverständlich muss eine mögliche Kompression des Materials beim Erfassen der Lage von Ober- und Unterkiefer berücksichtigt werden.

Um eine bequeme Verwendung der Vorrichtung zu unterstützen, sind die Träger gemäß einer bevorzugen Ausführungsform federnd gegeneinander gelagert. Gemäß einer Weiterbildung dieser Ausführungsform kann die Belastung der Federung an einem oder mehreren Punkten erfasst werden. Diese Information kann zur Unterstützung einer besonders ergonomischen Bissrekonstruktion hinzugezogen werden. Dadurch können Verspannungen in der Kiefermuskulatur, Kopfschmerzen und andere negative Effekte vermieden werden, die bei der Verwendung von Zahnersatz entstehen können. Die Federung kann dabei sowohl über klassische Federn, wie Schraubenfedern, Bügelfedern oder Spiralfedern, als auch durch die Verwendung kompressibler Materialien, wie federnd kompressiblen Polymeren und kompressiblen Flüssigkeiten, erfolgen. Flüssigkeiten, die zwischen Kammern verschoben werden und beispielsweise durch spezielle Ventile oder enge Verbindungen mit geringem Durchfluss bremsend wirken, sind auch denkbar.

Insbesondere wenn die erfasste, relative Lage analog verzeichnet werden soll, ist es vorteilhaft, wenn die beiden Träger in ihrer relativen Position zueinander fixiert werden können. Entsprechend sind die Träger gemäß einer weiteren bevorzugten Ausführungsform der Vorrichtung in ihrer relativen Position zueinander arretierbar.

Um die relative Lage der Kiefer zu ermitteln, weist die Vorrichtung erfindungsgemäß eine Einrichtung zum Erfassen der relativen, räumlichen Lage des oberen und unteren Trägers zueinander auf. Drei mögliche Ausführungsformen für die Gestaltung dieser Einrichtung werden im Folgenden beschrieben.

Bei einer ersten Ausführungsform der Einrichtung zum Erfassen der räumlichen Lage der Träger weist die Vorrichtung an wenigstens drei bekannten Punkten Abstandsmesser auf, die den Abstand zwischen den Trägern erfassen. Diese können vollkommen analog aufgebaut sein und wie Messschieber funktionieren. In einer ausschließlich analogen Ausführungsform können die Werte von den Abstandsmessern durch eine Bedienperson abgelesen und notiert werden, um später weiterverarbeitet zu werden.

In einer alternativen Ausführungsform können die Abstände auch elektronisch, beispielsweise mit kapazitiven Abstandsmessern, erfasst werden. Selbstverständlich können auch derartig erfasste Werte einfach angezeigt und notiert werden. Es besteht aber auch die Möglichkeit, diese Werte auf eine Recheneinheit zu übertragen und zur computerunterstützen Konstruktion eines Zahnersatzes zu verwenden.

Bei einer zweiten Ausführungsform der Einrichtung zum Erfassen der räumlichen Lage der Träger sind die Träger mit einem multidirektionalen Gelenk, insbesondre einem Kugelgelenk, verbunden, und die Einrichtung erfasst eine Stellung des Kugelgelenks. Dies kann beispielsweise durch einfache Markierungen auf dem Kugelgelenk erfolgen. Alternativ können beispielsweise auch Drehcoder, wie bei sehr frühen Varianten von Computermäusen, verwendet werden.

In einer dritten, möglichen Ausführungsform der Erfindung können flüssigkeitsgefüllte Kammern zwischen den Trägern vorgesehen sein. Werden die Träger einander angenähert, wird die Flüssigkeit in den Kammern verdrängt. Die verdrängte Flüssigkeit kann dann durch Volumenmesser erfasst werden. Das Erfassen kann, wie auch in den anderen Fällen, sowohl analog als auch digital erfolgen. Als einfaches Beispiel für eine analoge Messung sind beispielsweise Hohlräume mit ablesbaren Skalen, vergleichbar mit einer Spritze, denkbar. Es ist aber auch denkbar, die Verschiebung der Flüssigkeit mittels digitaler Durchflussmesser zu erfassen.

Gemäß einer weiteren Ausführungsform der Erfindung können die beiden Träger auch jeder für sich einen Lagesensor aufweisen. Wenn die Lage der beiden Träger im Raum hinreichend präzise bekannt ist, ist in der Folge auch die relative Lage der Träger zueinander bekannt. Der Vorteil einer solchen Ausführungsform ist, dass die Träger zueinander mechanisch einfacher gelagert werden können.

Unabhängig von der mechanischen Gestaltung der Einrichtung zum Erfassen der räumlichen Lage der Träger können, wie weiter oben beschrieben, elektronische bzw. digitale Informationen über die relative räumliche Lage der Träger erzeugt werden. Es bestehen mehrere Möglichkeiten, diese Daten zur weiteren Verarbeitung an eine Recheneinheit zu übertragen bzw. ein Mittel zum Übertragen von Daten, das die Vorrichtung bevorzugt aufweist, zu gestalten.

In einer ersten Ausführungsform kann das Mittel zum Übertragen von Daten ein geeignetes Kabel sein, das die Vorrichtung mit einer Recheneinheit verbindet. Diese Variante ist vor allem einfach und kostengünstig zu erzeugen.

In einer zweiten Ausführungsform kann das Mittel zum Übertragen von Daten ein Sender bzw. Sender/Empfänger sein, der eine drahtlose Verbindung mit einer Recheneinheit herstellt. Dies erleichtert die Handhabung der Vorrichtung, da nicht auf ein Verbindungskabel geachtet werden muss.

Bei allen Ausführungsformen, die kein Kabel verwenden, mit dem die Vorrichtung auch mit Energie versorgt werden kann, ist es sinnvoll, die Vorrichtung außerdem mit einem elektrischen Energiespeicher zu versehen. Dieser kann beispielsweise in den Trägern angeordnet sein.

Eine besondere Ausführungsform der Erfindung, die nur einen sehr schwachen Energiespeicher benötigt, dabei aber gleichzeitig den Komfort eines fehlenden Kabels bietet, weist einen Datenspeicher in der Vorrichtung auf, da damit keine Energie für die Übertragung, sondern lediglich für das Erfassen und Speichern benötigt wird.

Weist die Vorrichtung einen Datenspeicher auf, kann dieser ausgelesen werden, nach dem die relative Position gemessen und gespeichert wurde. Dies kann erfolgen, indem der Datenspeicher aus der Vorrichtung genommen und in ein entsprechendes Lesegerät gelegt wird oder auch, indem die Vorrichtung über eine entsprechende Verbindung an eine entsprechende Recheneinheit oder eine Übertragungseinrichtung gesteckt wird.

Das erfindungsgemäße Verfahren beinhaltet zumindest die folgenden Schritte:
a. Ermitteln der räumlichen Lage in Form von Messdaten,
b. Übertragen der Lage der Messdaten an eine Recheneinheit,
c. Zur Verfügung Stellen von 3D Modellen eines Oberkiefers und eines Unterkiefers,
d. Kombinieren der Messdaten und der zur Verfügung gestellten 3D Modelle eines Oberkiefers und Unterkiefers zu einer dreidimensionalen, relativen, räumlichen Lage, und
e. Darstellen des Oberkiefers und Unterkiefers in der dreidimensionalen, relativen, räumlichen Lage.

Schritt a. erfolgt bevorzugt mit einer erfindungsgemäßen Vorrichtung. Schritt b. kann ebenfalls mit einer der bevorzugten Ausführungsformen der Erfindung, insbesondere den beschriebenen Mitteln zum Übertragen von Daten, erfolgen.

In Schritt c. werden die 3D Modelle eines Oberkiefers und eines Unterkiefers geladen. Gemäß einer bevorzugten Durchführungsform des Verfahrens wurden die 3D Modelle mit einem intraoralen 3D Scanner erstellt. Gemäß einer anderen bevorzugten Durchführungsform des Verfahrens sind die 3D Modelle mittels eines 3Ds Scanner digitalisierte, physische Abdrücke des Oberkiefers und/oder Unterkiefers.

Schritt c. kann selbstverständlich auch zu einem früheren Zeitpunkt erfolgen. Wesentlich ist, dass für Schritt d. sowohl die 3D Modelle von Oberkiefer und Unterkiefer als auch die Informationen zur räumlichen Lage einer Recheneinheit zur Verfügung stehen.

In Schritt d. werden die 3D Modelle und die Lage, genau genommen die Informationen zur räumlichen Lage, kombiniert und dann in einem Schritt e. dargestellt.

Weitere bevorzugte Ausführungsformen der Erfindung sind Gegenstand der übrigen Unteransprüche.

Nachstehend ist ein bevorzugtes Ausführungsbeispiel der Erfindung anhand der Zeichnungen näher beschrieben. Der besseren Übersicht halber sind gleichartige Bauteile in verschiedenen Figuren und/oder Ausführungsformen mit den gleichen Bezugszeichen versehen. Es zeigen:
- Fig. 1a-1d: eine erste Ausführungsform der Vorrichtung in einer ersten Stellung,
- Fig. 2a-2d: die erste Ausführungsform in einer zweiten Stellung,
- Fig. 3a-3d: die erste Ausführungsform in einer dritten Stellung,
- Fig. 4a-4d: eine zweite Ausführungsform der Vorrichtung in einer ersten Stellung,
- Fig. 5a-5d: die zweite Ausführungsform in einer zweiten Stellung,
- Fig. 6a-6d: die zweite Ausführungsform in einer dritten Stellung
- Fig. 7: eine dritte Ausführungsform in einer Stellung wie in den Fig. 2a-2d und
- Fig. 8: eine Durchführungsform des erfindungsgemäßen Verfahrens.

In den Figuren werden zwei mögliche Ausführungsformen der Erfindung in grob schematisierter Weise aus verschiedenen Ansichten und in verschiedenen Stellungen gezeigt.

Alle dargestellten Ausführungsformen haben jeweils einen oberen Träger 1 mit einer oberen Anlagefläche 2 und einen unteren Träger 3 mit einer unteren Anlagefläche 4.

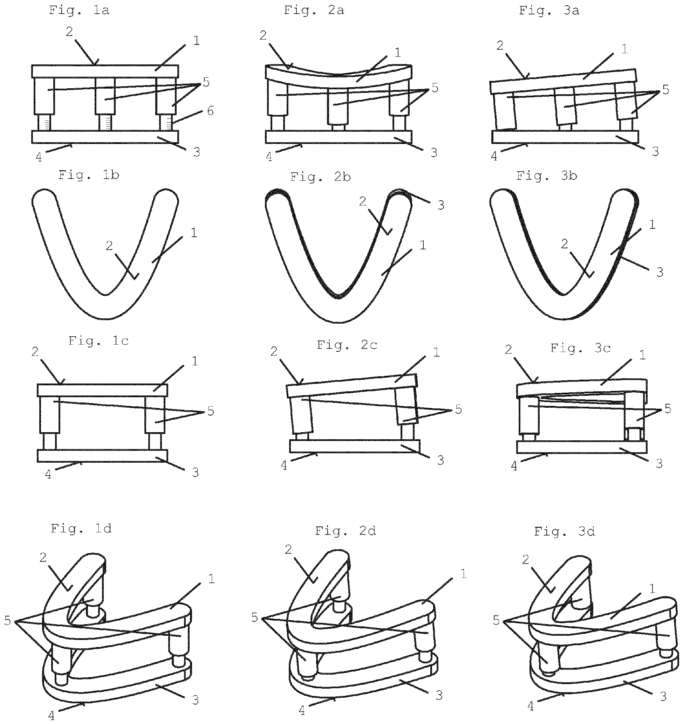

In den Figuren 1 bis 3 ist eine erste Ausführungsform dargestellt, bei der zwischen den Trägern 1, 3 an drei Stellen Abstandsmesser 5 angeordnet sind. Diese Abstandsmesser 5 können sowohl analog als auch elektronisch ausgeführt sein. Für eine sehr einfache Umsetzung können beispielsweise Skalen 6 (siehe Fig. 1) vorgesehen sein, die eine Bedienperson ablesen kann.

Die Abstandsmesser 5 können aber auch elektronisch arbeiten, beispielsweise mit kapazitiven Abstandsmessern oder auf der Basis von Piezokristallen.

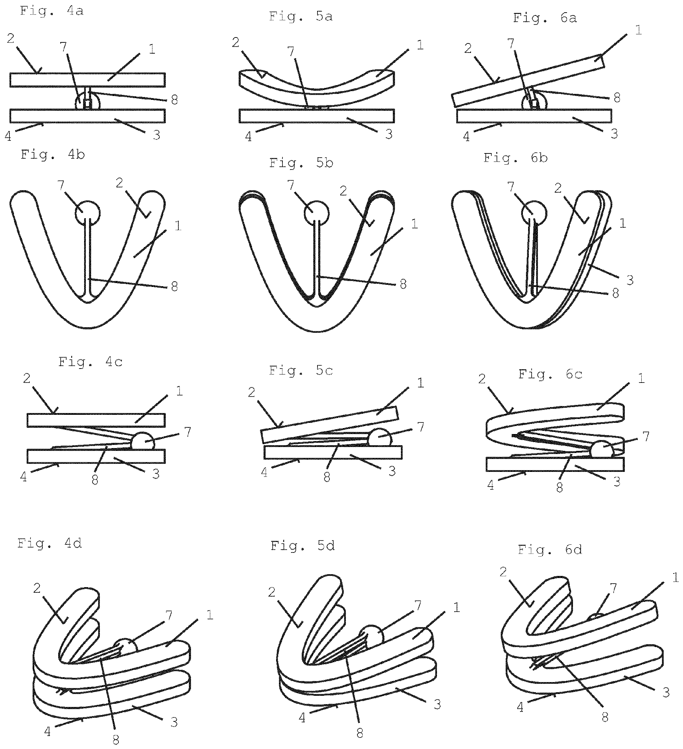

In den Figuren 4 bis 6 ist eine zweite Ausführungsform dargestellt, bei der die Träger 1, 3 mit einem Kugelgelenk 7 verbunden sind. Dieses ist vorteilhaft exzentrisch angeordnet und über Stege 8 mit den Trägern 1, 3 verbunden.

Wenn die Stellung des Kugelgelenks 7 elektronisch erfasst wird, kann in einem oder beiden Trägern 1, 3 eine Energiequelle, beispielsweise eine Batterie oder ein Akkumulator, angeordnet sein, und die Stege 8 eine Verbindung zwischen den Energiequellen in den Trägern 1, 3 und Sensoren im Kugelgelenk 7 herstellen.

Man erkennt außerdem, dass das Kugelgelenk 7 in der zweiten Ausführungsform weit außerhalb des geometrischen Zentrums der Vorrichtung angeordnet ist. Dadurch sind die Träger 1, 3 in der Lage, sich einander anzunähern, was ein korrektes Erfassen der relativen Lage von Ober- und Unterkiefer fördert.

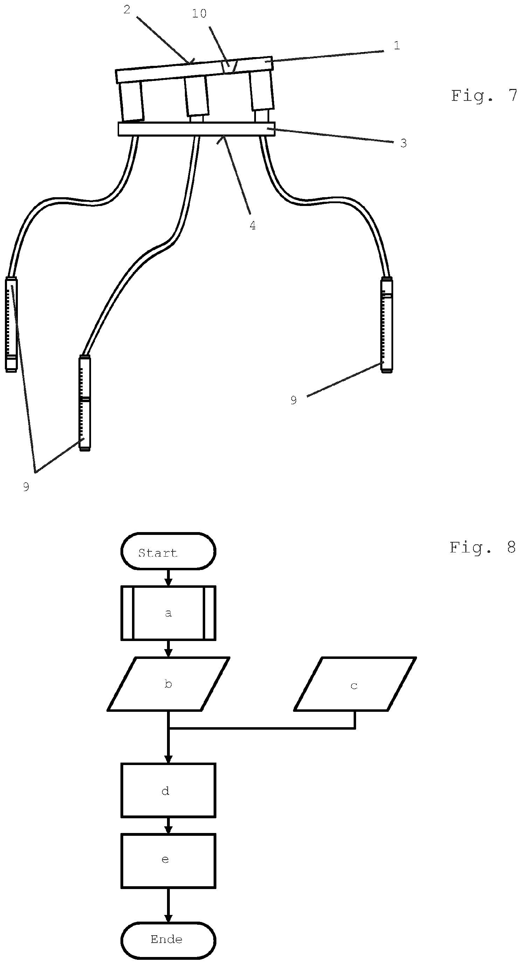

Die in Fig. 7 gezeigte Vorrichtung ist ähnlich aufgebaut wie jene von Fig. 1 bis 3 und in einer Stellung und Ansicht wie in Fig. 3a. Allerdings sind die Träger 1, 3 so gelagert, dass eine Flüssigkeit aus Kammern zwischen den Trägern verdrängt werden kann. Die verdrängte Flüssigkeit kann dann beispielsweise mit Skalen 9 gemessen werden.

Fig. 7 zeigt weiters eine Ausnehmung 10 im oberen Träger. In diese Ausnehmung kann beispielsweise ein verbliebener Zahn im Oberkiefer eingreifen. Es ist aber zum Beispiel auch möglich, dass sich an der korrespondierenden Stelle im Kiefer ein Heilabuttment für ein Implantat befindet.

Fig. 8 illustriert ein erfindungsgemäßes Verfahren. In Schritt a werden Messdaten über die relative räumliche Lage der Träger erfasst und dann in Schritt b für den weiteren Prozess zur Verfügung gestellt. In Schritt c werden außerdem Daten zu intraoralen Strukturen Zur Verfügung gestellt. Diese können beispielsweise mit einem Intraoralscanner gewonnen worden sein. Es besteht aber auch die Möglichkeit, dass herkömmlich analog erzeugte Abdrücke digitalisiert worden sind, um die Daten für Schritt c zu erzeugen. In Schritt d werden die in den Schritten b und c zur Verfügung gestellten Daten zusammengeführt und kombiniert. Dabei entsteht ein ausgedehntes Modell, das sowohl die intraoralen Strukturen als auch ihr räumliches Verhältnis berücksichtigt. In Schritt e wird das ausgedehnte Modell dann dargestellt.

## Patentansprüche

1. Vorrichtung zum Ermitteln der relativen Lage eines Ober- und Unterkiefers, **dadurch gekennzeichnet, dass** die Vorrichtung einen oberen Träger (1) mit einer oberen Anlagefläche (2) für den Oberkiefer und einen unteren Träger (3) mit einer unteren Anlagefläche (4) für den Unterkiefer aufweist, wobei die Träger (1, 3) in einer Gebrauchslage der Vorrichtung mit einem Oberkiefer und einem Unterkiefer korrespondieren, und dass die Vorrichtung eine Einrichtung zum Erfassen der relativen, räumlichen Lage des oberen und unteren Trägers zueinander aufweist.

2. Vorrichtung nach Anspruch 1, **dadurch gekennzeichnet, dass** die Einrichtung an wenigstens drei Messpunkten Abstandsmesser (5) aufweist, die den Abstand zwischen den Trägern (1, 3) erfassen.

3. Vorrichtung nach Anspruch 1, **dadurch gekennzeichnet, dass** die Träger (1, 3) mit einem multidirektionalen Gelenk (7), insbesondere einem Kugelgelenk, verbunden sind, und dass die Einrichtung eine Stellung des Kugelgelenks erfasst.

4. Vorrichtung nach Anspruch 1, **dadurch gekennzeichnet, dass** die Einrichtung flüssigkeitsgefüllte Kammern, die wenigstens zum Teil miteinander verbunden sind, sowie ein Mittel (9) zum Erfassen von Flüssigkeitsverschiebungen zwischen verbundenen Kammern aufweist.

5. Vorrichtung nach einem der Ansprüche 1 bis 4, **dadurch gekennzeichnet, dass** die Einrichtung digital ist und ein Mittel zum Übertragen der erfassten, relativen, räumlichen Lage aufweist.

6. Vorrichtung nach einem der Ansprüche 1 bis 5, **dadurch gekennzeichnet, dass** die Träger (1, 3) Ausnehmungen (10) aufweisen, die zu intraoralen Strukturen im jeweiligen Kiefer korrespondieren.

7. Vorrichtung nach einem der Ansprüche 1 bis 6, **dadurch gekennzeichnet, dass** die Träger (1, 3) zueinander federnd gelagert sind.

8. Vorrichtung nach Anspruch 7, **dadurch gekennzeichnet, dass** die Vorrichtung ein Mittel zum Erfassen der Federbelastung zwischen den Trägern (1, 3) aufweist.

9. Vorrichtung nach einem der Ansprüche 1 bis 8, **dadurch gekennzeichnet, dass** die Träger in ihrer relativen Position zueinander arretierbar sind.

10. Vorrichtung nach einem der Ansprüche 3 bis 9, **dadurch gekennzeichnet, dass** die Vorrichtung eine Mittel zum Übertragen von Daten aufweist.

11. Vorrichtung nach Anspruch 10, **dadurch gekennzeichnet, dass** die Vorrichtung ein Mittel zur drahtlosen Datenübertragung aufweist.

12. Vorrichtung nach einem der Ansprüche 3 bis 11, **dadurch gekennzeichnet, dass** die Vorrichtung einen Datenspeicher aufweist.

13. Vorrichtung nach einem der Ansprüche 1 bis 12, **dadurch gekennzeichnet, dass** die Vorrichtung wenigstens einen Sensor zur Bestimmung der Lageänderung beinhaltet.

14. Computerimplementiertes Verfahren zum Betreiben einer Vorrichtung mit den Merkmalen der Ansprüche 1 bis 13 zum Ermitteln der relativen Lage eines Ober- und Unterkiefers, **dadurch gekennzeichnet, dass** das Verfahren die folgenden Schritte beinhaltet:
a. Ermitteln von Lagedaten der räumlichen Lage der Träger in Form von Messdaten,
b. Übertragen der Messdaten an eine Recheneinheit,
c. Zur Verfügung stellen von 3D-Modellen eines Oberkiefers und eines Unterkiefers,
d. Kombinieren der Messdaten und der zur Verfügung gestellten 3D Modelle eines Oberkiefers und Unterkiefers zu einer dreidimensionalen, relativen, räumlichen Lage, und
e. Darstellen des Oberkiefers und Unterkiefers in der dreidimensionalen, relativen, räumlichen Lage.

15. Verfahren nach Anspruch 14, **dadurch gekennzeichnet, dass** die 3D Modelle mit einem intraoralem 3D Scanner erstellte, digitale Abdrücke des Oberkiefers und/oder Unterkiefers sind.

16. Verfahren nach Anspruch 14, **dadurch gekennzeichnet, dass** die 3D Modelle mit einem 3D Scanner digitalisierte, physische Abdrücke des Oberkiefers und/oder Unterkiefers sind.
